# NEW EUROPEAN PATENT SPECIFICATION

(11) **EP 1 276 580 B2**
(45) Date of publication and mention of the opposition decision: **19.10.2016**
(45) Mention of the grant of the patent: 12.12.2007
(21) Application number: 01926281.5
(22) Date of filing: 25.04.2001
(51) Int. Cl.: B23C 5/20

(54) **MILLING TOOL**
FRÄSER
FRAISE

(30) Priority: 28.04.2000 SE 0001554
(43) Date of publication of application: 22.01.2003
(73) Proprietor: Sandvik Intellectual Property AB, 811 81 Sandviken (SE)
(72) Inventor: HANSSON, Lars-Ola, 811 61 Sandviken (SE); PANTZAR, Göran, 810 22 Årsunda (SE); SVENNINGSSON, Inge, 811 35 Sandviken (SE)
(74) Representative: WSL Patentanwälte Partnerschaft mbB
(86) International application number: PCT/SE2001/000885
(87) International publication number: WO 2001/083142

(56) References cited:
- EP-A1- 0 555 192
- EP-A2- 1 002 608
- EP-A2- 1 077 100
- WO-A1-99/36217
- US-A- 4 417 489
- US-A- 4 808 044
- US-A- 5 368 418
- US-A- 5 913 644

## Description

### Technical field of the invention

This invention relates to a milling tool of the type that comprises a body that is rotatable around a geometrical centre axis with an envelope surface along which is arranged at least one set of tangentially spaced-apart cutting members, each one of which features a chip forming edge formed adjacent to a flank surface, which edge extends between axially spaced-apart ends (see for example US-A-5 368 418).

### Background of the invention

In previously known milling tools for metalworking, all cutting members have one and the same clearance angle, which is generally within the range of 7-15° and frequently amounts to 10-11 °. During practical milling, the ability of the tool to remove metal is often limited by the stability of the system tool/work piece/machine tool. When milling with indexable insert tools, the stability, and thereby also the ability of the tool to remove metal, can be improved by geometrical optimization of the rake and flank surfaces of the cutting members, i.e. by choosing optimal cutting angles. When milling shoulders, for instance, at angles in relation to the end face of the tool, in the range of 30-95°, it is necessary that the axial, radial and cutting edge angles of the cutting members be adapted to the angle which the shoulder is to have, also the line of the cutting edge is shaped to match the shape of the shoulder in question which is to be generated. The optimization of the geometry of the rake and clearance angles of the cutting members in order to gain stability, and thereby improved removing capacity leads, however, to the fact that only one single tool diameter can generate the desired angle of the shoulder. In other words, the individual tool can only be designed with one single diameter for each purpose, if both the requirement for a determined angle of the shoulder as well as the requirement for an optimized rake and clearance geometry from a stability point of view are to be met. It should also be pointed out that, in practice, unstable milling tools give a mediocre machining precision in respect to the flatness of the machined surface. An unstable, vibrating milling tool thus gives rise to at least small wavy formations on the machined surface of the workpiece.

### Aims and features of the invention

The present invention aims at obviating the above-mentioned inconveniences of previously known milling tools and at providing an improved milling tool. Thus, a primary aim of the invention is to provide a milling tool which is capable of working in a stable, substantially vibration free way and at the same time generate machined surfaces having a high degree of flatness. It is also an aim to provide a milling tool which at a given diameter can be used for, for instance, different types of shoulders while at the same time maintaining a good machining precision as well as a stable operation.

According to the invention, at least the primary object is attained by the features defined in the characterizing clause of claim 1. Preferred embodiments of the milling tool according to the invention are furthermore defined in the dependent claims.

### Brief description of the appended drawings

In the drawings:
- Fig 1: is a schematic side view showing a milling tool in the form of a long edge milling cutter,
- Fig 2: is a section A-A in fig 1 showing an individual set of cutting members included in the tool according to fig 1, and
- Fig 3: is a slightly perspectively illustrated, enlarged end view of the milling cutter body itself, the cutting members having been removed from the appurtenant seats in the cutter body.

### Detailed description of a preferred embodiment of the invention

In the drawings, numeral 1 generally designates a cutter body or shell, which is rotatable around a geometrical centre axis C. In addition to a rear part 2 for attachment in a suitable tool holder, the cutter body 1 includes a front main part 3, the envelope surface 4 of which in the example shown has a cylindrical basic shape. However, in this connection, it should be pointed out that the part 3 can also have another rotationally symmetrical basic shape than cylindrical, e.g. conical.

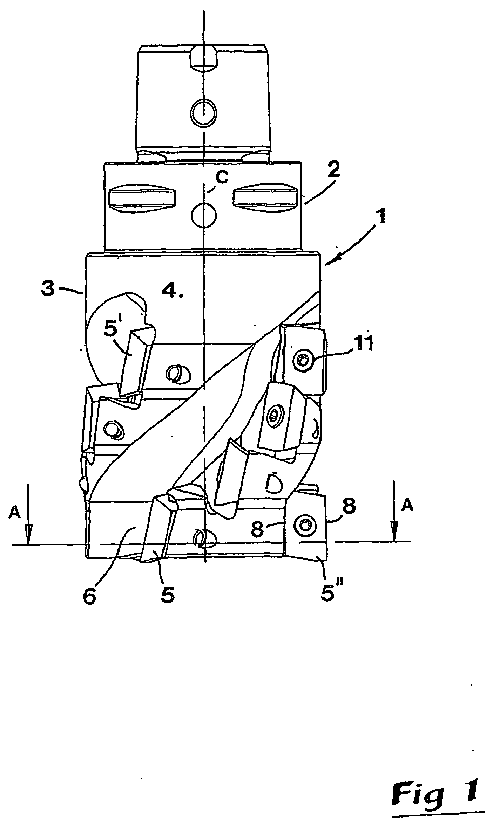

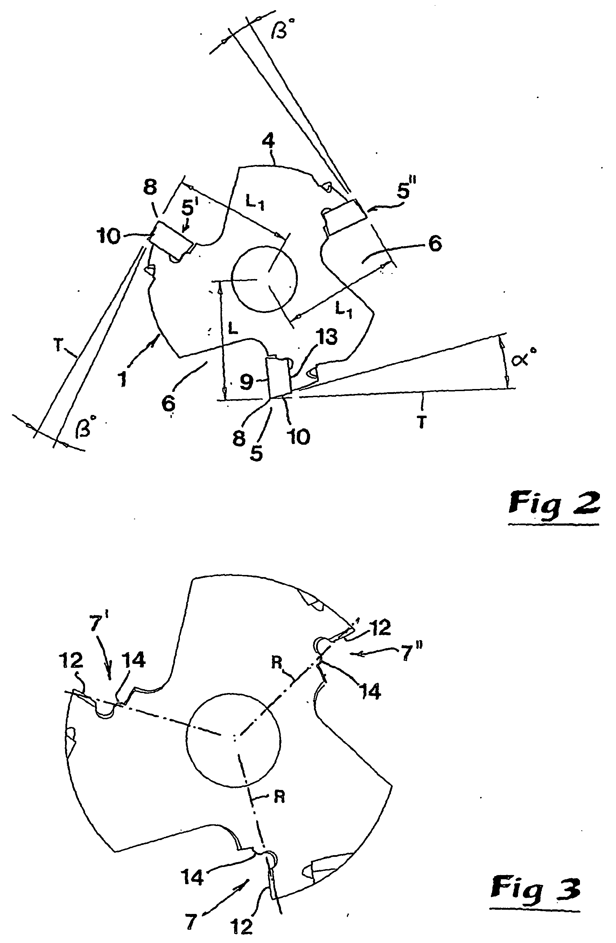

In the example, the tool consists of a long edge milling cutter which, in a known way, includes a plurality of rows of axially spaced-apart cutting insert members which in this case are in the form of detachably mounted cutting inserts 5 which are indexable. The cutting inserts in each individual row are housed in a helicoidal recess formed along the envelope surface of the cutter body, which recess serves as a chip channel 6 in the area up-stream of the cutting inserts. For each individual cutting insert, there is a separate seat 7 (see fig 3). Said seats are placed in such a way that the cutting inserts in the mounted state overlap each other axially, as is clearly seen in fig 1. In the exemplified embodiment, the tool includes three rows of inserts having four individual cutting inserts in each row. Thus, in any plane perpendicular to the centre axis C, a set of three cutting inserts 5, 5', 5" (see fig 2) acts. These can either be exactly situated in one and the same axial position in the common plane or be somewhat displaced in relation to each other in the axial direction to partly overlap each other during operation.

Each individual cutting insert 5 has an active cutting edge 8 situated between a rake surface 9 and a flank surface 10. When the cutting insert is indexable, as in the example, the same has two opposite, substantially parallel edges 8. In practice, the individual cutting edge can either be straight or slightly helicoidal in order to, depending on the cutting edge angle of the cutting inserts, follow the generally cylindrical or rotationally symmetrical basic shape of the milling cutter body. The individual cutting insert can to advantage be secured in the appurtenant seat 7 by means of a screw 11.

As can be seen in fig 3, the individual seat 7 is, in the main, defined by a bottom surface 12 against which the bottom side 13 (see fig 2) of the cutting insert is pressable, as well as an abutment surface 14 against which an inactive flank surface 5 of the cutting insert can be pressed in order to determine the radial position of the cutting insert relative the cutter body.

As far as the shown long edge milling cutter has been described hitherto, the same is in all essentials previously known (see for instance US 5,083,887, US 5,586,843, US 5,882,150 and US 5,913,644).

Before the invention is described in detail, it should be emphasized that the general idea according to the invention is in no way limited to long edge milling cutters only. Thus, the invention can also be applied, for instance, to long edge milling cutters of the type that includes only one set of tangentially spaced-apart cutting inserts arranged in a common plane.

Characteristic of the invention is that the different cutting inserts 5, 5', 5" of the individual sets of cutting inserts have different clearance angles. More precisely, one of the cutting inserts, i.e. the cutting insert 5, has a clearance angle α which is larger than the clearance angle β of the other cutting inserts 5', 5" of the same set. By clearance angle, it should, in the usual way, be understood the angle which is formed between the flank surface 10 of the individual cutting body and a conceived tangential line T through the cutting edge 8. The angle α of the cutting insert 5 can be within the range of 5-25°, and suitably within the commonly accepted area of 7-15°. Advantageously, the clearance angle in question can amount to 10 to 11 °. The clearance angle β of the other two cutting inserts 5', 5" should, in turn, be within the range of 0,5-5°, suitably 1-4°. In practice, the clearance angle β can advantageously amount to 2 to 3 °. In this connection, it should be pointed out that the above mentioned clearance angles are valid regardless of whether the cutting inserts have straight cutting edges and plane flank surfaces or curved cutting edges and bent flank surfaces.

According to the invention, the cutting insert 5 which has the largest clearance angle α is located or made in such a way that the distance L between the cutting edge 8 and the centre axis C of the milling cutter body is somewhat larger than the corresponding distance L₁ between the centre axis and the cutting edges of the two other cutting inserts 5', 5" which have the smaller clearance angle β. In practice, the difference between the values L and L₁ is small, although clearly marked. More precisely, the difference in distance should be within the range of 0,01-0,08 mm, preferably 0,03-0,06 mm and amount to approx. 0,05 mm.

Although it is possible, per se, to provide the different clearance angles and said differences in distance between the edges, respectively, by manufacturing, on the one hand, the milling cutter body with identically shaped and placed seats for the cutting insert and, on the other hand, two types of cutting inserts with different geometries, the embodiment illustrated in the drawings is preferred. In this case, all cutting inserts 5, 5', 5" of the same set (and also in the same row) have one and the same embodiment, i.e. the same geometry, while the seats 7 have a varying design. Thus, in fig 3 is illustrated how the seat 7 for the cutting insert 5 having the larger clearance angle α is formed with a bottom surface 12 extending at a comparatively flack angle to a conceived radial plane R that intersects a given point along the bottom surface, at the same time as the corresponding bottom surface 12 at the seats 7', 7" for the cutting inserts 5', 5" extends at a steeper angle to the analogous radial planes R. Furthermore, the abutment surface 14 at the seat 7 is located at a radial distance from the centre axis C of the milling cutter body that is larger than the radial distance between the centre axis and the corresponding abutment surfaces 14 of the seats 7', 7". In this way, it is guaranteed that the edge 8 of the cutting insert 5 is located at a somewhat larger distance from the centre axis than the corresponding edges of the cutting inserts 5', 5" having a minimal clearance angle. Thanks to the bottom surfaces 12 of the seats 7', 7" extending at a steeper angle to the appurtenant radial plane than the bottom surface 12 of the seat 7, the two cutting bodies 5', 5" will, at the mounting in the seat, be angled somewhat forwards in comparison with the cutting insert 5 and in this way be located with the flank surfaces 10 thereof in the smaller clearance angle β in relation to the tangent line T.

In that all cutting inserts have an identical shape, the stock keeping as well as the handling in connection with the requisite indexing and exchange of cutting inserts, respectively, are, to a large extent, facilitated.

### Function and advantages of the invention

When milling with the milling tool according to the invention, the cutting inserts having a reduced clearance angle will induce damping when the tool turns in relation to the machined surface of the work piece, and thereby guarantee stability in the tool, whilst the cutting insert with the maximum clearance angle works with a more easy-cutting action while guaranteeing the requisite machining precision. Expressed in other words, the cutting insert having the maximum clearance angle is so placed and made in respect to the radial angle, axial rake angle and setting angle that the tool related geometry thereof generates the desired final form of a machined, plane surface or shoulder. Thus, the cutting insert having the maximum clearance angle generates a genuine plane surface with a predetermined angle in relation to the end face of the milling tool. The other cutting inserts in the tool, i.e. the cutting inserts having the reduced clearance angle have in turn the role of meeting the requirements for an optimum stability, i.e. a vibration free operation, without themselves giving the desired final precision in respect of the flatness of the machined surface.

### Feasible modifications of the invention

The invention is not solely restricted to the embodiment described above and shown in the drawings. Thus, as already previously has been pointed out, the invention can be applied not only in connection with long edge milling cutters, but also to other milling tools, e.g. square shoulder facemills, of the type that includes a set of tangentially spaced-apart radial cutting inserts. Although the invention has been exemplified in connection with such milling tools that include detachably mounted cutting inserts, in particular indexable cutting inserts, the invention is also applicable to tools having fixed, e.g. brazed cutting inserts. It is even feasible to form the requisite cutting members, particularly chip forming edges, in the proper milling body if this is made of a hard material, e.g. cemented carbide. In other words, the concept "cutting members" such as it is used in the subsequent claims, should be interpreted in the widest sense and be regarded as including not only separately manufactured cutting inserts irrespective of whether these are detachably mounted or fixedly attached, but also such cutting members which are integrated into the actual milling body. As also has been pointed out above, the general idea according to the invention can also be realized by means of suitable formed cutting inserts of two different types, which are mounted in identically formed and placed seats. In the embodiment example, only three cutting members are shown in the set of cutting members in question. In practice, the number of cutting members of each set can be considerably larger than only three. In such cases, more than one cutting member can be formed having the larger clearance angle, while other cutting members have reduced clearance angles (e.g. when the tool includes 10 to 20 cutting members). In all events, however, the number of cutting members having the maximum clearance angle should be smaller than the number of cutting members having the reduced clearance angle. Within the scope of the invention, it is even feasible to equip the milling cutter body with cutting members that not only have two, but more clearance angles of different sizes.

## Claims

1. Milling tool including a body (1) rotatable around a geometrical centre axis (C) and having an envelope surface (4) along which at least one set of tangentially spaced-apart cutting members (5,5', 5") is arranged, each one of which having a chip forming edge (8) formed adjacent to a flank surface (10), which edge extends between axially spaced apart ends, whereas the flank surface (10) for at least a first cutting member (5) of said set extends at a first clearance angle (α) in relation to a conceived tangent line (T) through the edge (8), and that the flank surface (10) for the other cutting member or members (5', 5") of the set extend at a second clearance angle (β), which is smaller than said first clearance angle (α), **characterised in that** the individual cutting member (5) having the larger clearance angle (α) has the cutting edge (8) thereof situated at a larger radial distance (L) from the centre axis (C) of the milling body than the other cutting member or members (5', 5").

2. Milling tool according to claim 1, **characterized in, that** the first clearance angle (α) is within the range of 5-25°, suitably 7-15°, and the second clearance angle (β) is within the range of 0,5-5°, suitably 1-4°.

3. Milling tool according to claim 1 or 2, the individual cutting members consisting of a separate cutting body (5,5', 5") which is detachably mounted in a seat (7) formed down-stream of a chip channel (6), which seat has a bottom surface (12), the angle of which in relation to a conceived radial plane (R) through a given point along the same determines the clearance angle of the cutting insert, **characterized in, that** all cutting bodies (5,5', 5") have an identical shape and that the bottom surface (12) for a cutting body (5) having said first clearance angle (α) extends at another angle in relation to said radial plane (R) than the bottom surface (12) for each cutting body (5', 5") having said second clearance angle (β).

4. Milling tool according to claims 1-3, **characterized in, that** the difference in radial distance between the edges (8) of the different cutting members is within the range of 0,01-0,08 mm, preferably 0,03-0,06 mm.

5. Milling tool according to any one of the claims 1-4, **characterized in, that** the number of cutting members (5) having the maximum clearance angle (α) is smaller than the number of cutting members (5', 5") having the smallest clearance angle (β).

## Patentansprüche

1. Fräser mit einem Körper (1), der um eine geometrische Mittelachse (C) drehbar ist und eine Hülloberfläche (4) hat, längs welcher mindestens eine Gruppe von tangential im Abstand angeordneten Schneidteilen (5, 5', 5") angeordnet ist, deren jedes eine Spanbildungskante (8) hat, die neben einer Freifläche (10) gebildet ist und sich zwischen axial im Abstand angeordneten Enden erstreckt, wobei die Freifläche (10) für mindestens ein erstes Schneidteil (5) dieser Gruppe sich unter einem ersten Freiwinkel (α) in Bezug auf eine gedachte Tangentenlinie (T) durch die Kante (8) erstreckt und dass die Freifläche (10) für das andere Schneidteil oder die anderen Schneidteile (5', 5") der Gruppe sich unter einem zweiten Freiwinkel (β) erstreckt, der kleiner als der erste Freiwinkel (α) ist, **dadurch gekennzeichnet, dass** die Schneidkante (8) des einzelnen Schneidteiles (5), welches den größeren Freiwinkel (α) hat, in einem größeren radialen Abstand (L) von der Mittelachse (C) des Fräserkörpers angeordnet ist als das andere Schneidteil oder die anderen Schneidteile (5', 5").

2. Fräser nach Anspruch 1, **dadurch gekennzeichnet, dass** der erste Freiwinkel (α) im Bereich von 5-25 ° liegt und zweckmäßigerweise 7-15 °, und dass der zweite Freiwinkel (β) im Bereich von 0,5-5 ° und zweckmäßigerweise 1 bis 4 °, liegt.

3. Fräser nach Anspruch 1 oder 2, wobei die einzelnen Schneidteile aus einem separaten Schneidkörper (5, 5', 5") bestehen, der lösbar in einem Sitz (7) angebracht ist, welcher abstromig eines Spankanals (6) gebildet ist und eine Bodenoberfläche (12) hat, deren Winkel bezüglich einer gedachten radialen Ebene (R) durch einen gegebenen Punkt entlang derselben den Freiwinkel des Schneideinsatzes bestimmt, **dadurch gekennzeichnet, dass** alle Schneidkörper (5, 5', 5") eine identische Form haben und dass die Bodenoberfläche (12) für einen Schneidkörper (5), der den ersten Freiwinkel (α) hat, sich unter einem anderen Winkel bezüglich dieser radialen Ebene (R) erstreckt als die Bodenoberfläche (12) für jeden Schneidkörper (5', 5"), welcher den zweiten Freiwinkel (β) hat.

4. Fräser nach einem der Ansprüche 1-3, **dadurch gekennzeichnet, dass** die Differenz im Radialabstand zwischen den Kanten (8) der unterschiedlichen Schneidteile im Bereich von 0,01-0,08 mm, vorzugsweise 0,03-0,06 mm, liegt.

5. Fräser nach einem der Ansprüche 1-4, **dadurch gekennzeichnet, dass** die Anzahl der Schneidteile (5) mit dem maximalen Freiwinkel (α) kleiner ist als die Anzahl von Schneidteilen (5', 5"), welche den kleinsten Freiwinkel (β) haben.

## Revendications

1. Fraise comprenant un corps (1) pouvant tourner autour d'un axe central géométrique (C) et ayant une surface enveloppe (4) le long de laquelle est disposée au moins une série d'éléments de coupe (5, 5', 5") espacés de façon tangentielle, dont chacun présente une arête de formation de copeaux (8) formée de manière adjacente à une surface de flanc (10), la dite arête s'étendant entre des extrémités axialement espacées, la surface de flanc (10) pour au moins un premier élément de coupe (5) de ladite série s'étendant selon un premier angle de dépouille (α) par rapport à une ligne tangente imaginaire (T) traversant l'arête (8), et en ce que la surface de flanc (10) pour l'autre élément ou les autres éléments de coupe (5', 5") de la série s'étend selon un second angle de dépouille (β) qui est inférieur au dit premier angle de dépouille (α), **caractérisée en ce que** l'élément de coupe individuel (5) ayant l'angle de dépouille le plus grand (α) son arête de coupe (8) située à une distance radiale (L), par rapport à l'axe central (C) du corps de fraise, supérieure à celle de l'autre élément ou des autres éléments de coupe (5', 5").

2. Fraise selon la revendication 1, **caractérisée en ce que** le premier angle de dépouille (α) est dans la plage allant de 5 à 25°, de manière adaptée de 7 à 15°, et le second angle de dépouille (β) est dans la plage allant de 0,5 à 5°, de manière adaptée de 1 à 4°.

3. Fraise selon la revendication 1 ou 2, les éléments de coupe individuels consistant en un corps de coupe distinct (5, 5', 5") qui est monté de manière amovible dans un siège (7) formé en aval d'un canal à copeaux (6), lequel siège présente une surface inférieure (12), dont l'angle par rapport à un plan radial imaginaire (R) traversant un point donné le long de celui-ci définit l'angle de dépouille de la pièce de coupe rapportée, **caractérisée en ce que** tous les corps de coupe (5, 5', 5") ont une forme identique et **en ce que** la surface inférieure (12) pour un corps de coupe (5) ayant un premier angle de dépouille (α) s'étend selon un angle différent, par rapport au dit plan radial (R), de celui de la surface inférieure (12) pour chaque corps de coupe (5', 5") ayant le dit second angle de dépouille (β).

4. Fraise selon l'une des revendications 1-3, **caractérisée en ce que** la différence, en distance radiale, entre les arêtes (8) des différents éléments de coupe est dans la plage allant de 0,01 à 0,08 mm, de préférence de 0,03 à 0,06 mm.

5. Fraise selon l'une des revendications 1-4, **caractérisée en ce que** le nombre d'éléments de coupe (5) ayant l'angle de dépouille maximal (α) est inférieur au nombre d'éléments de coupe (5', 5") ayant l'angle de dépouille le plus petit (β)
